# EUROPÄISCHE PATENTSCHRIFT

(11) **EP 1 179 388 B1**
(45) Veröffentlichungstag und Bekanntmachung des Hinweises auf die Patenterteilung: **29.12.2004**
(21) Anmeldenummer: 01118571.7
(22) Anmeldetag: 02.08.2001
(51) Int. Cl.: B23Q 11/00, B23Q 3/157, B08B 1/00

(54) **Verfahren zum Reinigen von Werkzeugschäften sowie Vorrichtung zur Durchführung eines solchen Verfahrens**
Method of cleaning tool shafts and device for carrying out such a method
Procédé pour le nettoyage de queues d'outils et dispositif pour la mise en oeuvre de ce procédé

(30) Priorität: 08.08.2000 DE 10038533
(43) Veröffentlichungstag der Anmeldung: 13.02.2002
(73) Patentinhaber: Gebr. Heller Maschinenfabrik GmbH, D-72622 Nürtingen (DE)
(72) Erfinder: Hiller, Norbert, 73240 Wendlingen (DE); Wohlfarth, Achim, 72581 Dettingen (DE); Ruff, Herbert, 72644 Oberboihingen (DE)
(74) Vertreter: Jackisch-Kohl, Anna-Katharina

(56) Entgegenhaltungen:
- EP-A- 0 420 039
- DD-A- 241 034
- SU-A- 1 505 753
- US-A- 5 353 823

## Beschreibung

Die Erfindung betrifft ein Verfahren zum Reinigen von Werkzeugschäften nach dem Oberbegriff des Anspruches 1 sowie eine Vorrichtung zur Durchführung eines solchen Verfahrens nach Anspruch 3.

Beim Betrieb von Werkzeugmaschinen entstehen durch den Formgebungsvorgang am Werkzeug verschiedene Gruppen von Schmutzpartikeln aus Spänen, aus dem Abrieb am Werkstück und Werkzeug oder aus Tropfen des Kühlschmierstoffs. Zusammen mit den Staubpartikeln der Umgebungsluft kann sich dieser Schmutz insbesondere im Arbeitsraum, aber auch in der Umgebung der Maschine niederschlagen. Schmutz an Werkzeugschäften und Spindelaufnahmen beeinträchtigt die erreichbaren Positionsgenauigkeiten von Bearbeitungswerkzeugen und sonstigen Werkzeugen in Maschinenspindeln, da durch die Zwischenlagerung von Schmutzpartikeln der direkte Kontakt und damit ein genauerer Paßsitz und eine volle Reibhaftung zwischen dem Werkzeughalter und seiner Aufnahme in der Spindel nicht mehr gewährleistet ist. Außer der in die Genauigkeit des Werkstückes unmittelbar eingehenden Positionsungenauigkeit der Schnittstelle Werkzeug/Spindel rufen die Verunreinigungen durch ihre schleifende, schmirgelnde und/oder läppende Wirkung auch unerwünschten Verschleiß hervor. Aus diesen Gründen müssen die Werkzeugschäfte regelmäßig gereinigt werden.

Der Reinigungseffekt kann durch Abblasen (DE 27 54 636), durch Abbürsten (EP 0 065 293), durch Abspülen (DE 197 22 003) oder durch eine sinnvolle Kombination dieser Verfahren (EP 0 584 014) erzielt werden. Beim Abblasen oder Abspülen können einzelne festsitzende Schmutzpartikel nicht entfernt werden. Beim Abbürsten muß das Werkzeug außerhalb der Maschine oder in einer speziellen Station behandelt werden, da der Spannschaft sowohl in der Maschinenspindel als auch im Aufnahmeköcher im Werkzeugmagazin normalerweise nicht zugänglich ist (DD-A-241 034, EP-A-0 420 039).

Insbesondere bei der modernen Hochgeschwindigkeitsbearbeitung und dem zunehmenden Einsatz von Leichtmetallwerkstoffen kommen extrem kurze Werkzeugeinsatzzeiten bei der Bearbeitung von Werkstücken zustande. Im Interesse einer effektiven Auslastung der Maschine darf jedoch die Werkzeugbereitstellungszeit für ein Folgewerkzeug die Werkzeugeinsatzzeit des Vorgängerwerkzeuges nicht überschreiten, da sonst unproduktive Wartezeiten entstehen würden. Jeder zusätzliche Reinigungsvorgang verlängert jedoch die Werkzeugbereitstellungszeit.

Der Erfindung liegt die Aufgabe zugrunde, das gattungsgemäße Verfahren und die gattungsgemäße Vorrichtung so auszubilden, daß die Werkzeughalter bzw. Werkzeugschäfte ohne zeitliche Verzögerungen gereinigt werden können.

Diese Aufgabe wird beim gattungsgemäßen Verfahren erfindungsgemäß mit den kennzeichnenden Merkmalen des Anspruches 1 und bei der gattungsgemäßen Vorrichtung erfindungsgemäß mit den kennzeichnenden Merkmalen des Anspruches 3 gelöst.

Beim erfindungsgemäßen Verfahren wird der Werkzeughalter oder Werkzeugschaft während des Werkzeugtransports vom Werkzeugmagazin in die Maschinenspindel und/oder von der Maschinenspindel in das Werkzeugmagazin gereinigt. Dabei bewegt sich das Reinigungselement mit dem Werkzeug mit, so daß keine zusätzlichen Stillstandszeiten für die Reinigung auftreten. Die Reinigung findet hauptzeitparallel statt. Infolge des erfindungsgemäßen Verfahrens wird die Werkzeugbereitstellungszeit nicht beeinträchtigt, auch wenn bei der Bearbeitung von Werkstücken extrem kurze Werkzeugeinsatzzeiten auftreten. Das Reinigungselement beim erfindungsgemäßen Verfahren kann mechanisch oder fluidisch arbeiten.

Bei der erfindungsgemäßen Vorrichtung wird der Werkzeughalter oder der Werkzeugschaft in der Vorrichtung untergebracht, in der sich auch das Reinigungselement befindet. Die Vorrichtung ist in die Transport- bzw. Greifeinrichtung zwischen dem Werkzeugmagazin und der Maschinenspindel bzw. dem Werkzeugwechsler integriert. Dadurch ist eine problemlose und dennoch wirkungsvolle Reinigung während des Werkzeugtransportes sichergestellt.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: im Axialschnitt eine erste Ausführungsform einer erfindungsgemäßen Reinigungseinrichtung,
- Fig. 2: eine Ansicht auf eine Anschlußwand der erfindungsgemäßen Reinigungseinrichtung gemäß Fig. 1,
- Fig. 3: in vergrößerter Darstellung eine Ansicht in Richtung des Pfeiles X in Fig. 1,
- Fig. 4: die Reinigungseinrichtung gemäß Fig. 1 in einem anderen Axialschnitt,
- Fig. 5: in einer Darstellung entsprechend Fig. 1 eine zweite Ausführungsform einer erfindungsgemäßen Reinigungseinrichtung,
- Fig. 6: die Einzelheit Y in Fig. 5 in vergrößerter Darstellung,
- Fig. 7: die Reinigungseinrichtung gemäß Fig. 5 in einem zweiten Axialschnitt.

Mit der im folgenden beschriebenen Reinigungseinrichtung werden Werkzeughalter oder Werkzeugschäfte gereinigt, um an ihnen haftende Schmutzpartikel aus Spänen, aus dem Abrieb an Werkstücken und/oder Werkzeug oder aus Tropfen des Kühlschmierstoffes zu beseitigen.

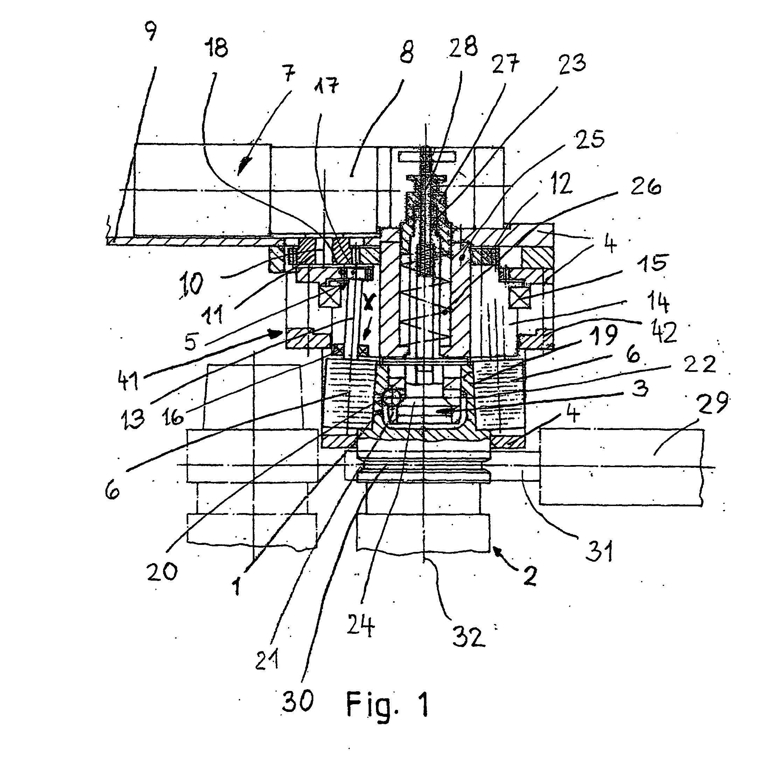

In Fig. 1 ist ein HSK-Schaft 1 eines Werkzeuges 2 mittels einer Werkzeugspanneinrichtung 3 in der Reinigungseinrichtung eingespannt. Sie hat ein Gehäuse 4, in dem ein Getriebe 5 zum Antrieb von Reinigungsbürsten 6 untergebracht ist. Das Getriebe 5 wird von einem Antrieb 7 angetrieben, der ein Elektromotor, ein Ölmotor, ein Luftmotor und dergleichen sein kann. Der Antrieb 7 hat ein Gehäuse 8, das an einer Seitenwand 9 des Gehäuses 4 der Reinigungseinrichtung befestigt ist. Eine Antriebswelle 10 des Antriebes 7 ragt durch die Seitenwand 9 in das Gehäuse 4 und trägt drehfest ein Zahnrad 11, mit dem das Getriebe 5 betätigt wird. Es ist vorteilhaft ein Planetengetriebe, das sich durch kompakte Abmessungen und eine hohe Untersetzung auszeichnet. Das Zahnrad 11 ist in Eingriff mit einem Sonnenrad 12 des Planetengetriebes 5.

Die Reinigungsbürsten 6 sitzen auf Wellen 13, die in einem Bürstenträger 14 drehbar gelagert sind. Er ist im Gehäuse 4 durch wenigstens ein Lager 15 drehbar gelagert und ist drehfest mit dem Sonnenrad 12 verbunden. Innerhalb des Bürstenträgers 14 sind die Wellen 13 um ihre Achse drehbar mit wenigstens einem Lager 16 gelagert. Das von der Reinigungsbürste 6 abgewandte Ende der Wellen 13 trägt jeweils ein Planetenrad 17, das mit einem feststehenden Zahnkranz 18 an der Innenwand des Gehäuses 4 in Eingriff ist. Dadurch wird beim Betrieb der Reinigungseinrichtung der Bürstenträger 14 um seine Achse gedreht, wodurch die Reinigungsbürsten 6 um diese Achse umlaufend bewegt werden. Hierbei werden die Reinigungsbürsten 6 infolge des Eingriffes ihrer Planetenräder 17 in den feststehenden Zahnkranz 18 um ihre Achse gedreht.

Der Bürstenträger 14 steht geringfügig in Richtung auf das in der Werkzeugspanneinrichtung 3 eingespannte Werkzeug aus dem Gehäuse 4 vor. Die Wellen 13 ragen ihrerseits in gleicher Richtung geringfügig aus dem Bürstenträger 14. Am überstehenden Teil der Wellen 13 sind die Reinigungsbürsten 6 befestigt. Da der Schaft 1 des Werkzeuges 2 konisch verjüngt ausgebildet ist, sind die Wellen 13 der Reinigungsbürsten 6 entsprechend schräg im Bürstenträger 14 gelagert, so daß die Reinigungsbürsten 6 während des Reinigungsvorganges über ihre Länge am konischen Außenmantel 19 des Werkzeugschaftes 1 anliegen. Die Wellen 13 der einzelnen Reinigungsbürsten 6 konvergieren somit in Richtung auf den Antrieb 7.

Die Werkzeugspanneinrichtung 3 ist in herkömmlicher Weise ausgebildet und hat Verriegelungselemente 20, die Kugeln, Walzen, Bolzen und dergleichen sein können. Die Verriegelungselemente 20 sind in einer Aufnahme 21 radial beweglich untergebracht. In der Spannstellung sind die Verriegelungselemente 20 radial nach außen verschoben und hintergreifen eine Schulter 22 an der Innenwandung des Hohlschaftes 1. Zur Betätigung der Verriegelungselemente 20 dient ein Betätigungsbolzen 23, der in bekannter Weise axial verschiebbar ist. Er kann beispielsweise hydraulisch oder pneumatisch angetrieben werden. Am freien Ende ist der Betätigungsbolzen 23 mit einem Konus 24 versehen, mit dem die Verriegelungselemente radial nach außen verschoben werden, wenn der Betätigungsbolzen 23 in Fig. 1 nach oben verschoben wird. Der Betätigungsbolzen 23 durchsetzt eine im Gehäuse 4 untergebrachte Buchse 25 mit Spiel. In ihr ist eine Halte- bzw. Spannfeder 26 untergebracht, die innerhalb der Buchse 25 den Betätigungsbolzen 23 mit Spiel umgibt. Sie stützt sich an einem Ende am Boden der Buchse 25 und am anderen, vom Werkzeug 2 abgewandten Ende an der Stirnseite einer Führung 27 für einen Führungsbolzen 28 ab. Er ragt in den Betätigungsbolzen 23, der auf dem Führungsbolzen geführt ist.

Zur Sicherung der Werkzeugspannung gegen Herausfallen wird zusätzlich zur Feder 26 die Führung 27 durch einen (nicht eingezeichneten) Bolzen, der mechanisch, elektrisch oder fluidisch betätigt wird, verriegelt.

Das Werkzeug 2 wird mit einem Werkzeugwechsler 29 in die Reinigungseinrichtung eingewechselt. Das Werkzeug 2 ist mit einer Greifernut 30 versehen, in welche der Werkzeugwechsler 29 mit Greifern 31 eingreift.

Zur Reinigung des Werkzeugschaftes 1 wird der Antrieb 7 eingeschaltet, wodurch die Reinigungsbürsten 6 über das Planetengetriebe 5 angetrieben werden. Die Reinigungsbürsten 6 laufen um die Achse 32 der Reinigungseinrichtung um und drehen hierbei um ihre eigenen Achsen. Dadurch wird der Werkzeugschaft 1 an seinem Außenmantel 19 einwandfrei gereinigt. Diese Reinigung des Werkzeugschaftes 1 erfolgt während des Ablaufs des Transportes des Werkzeuges 2 von einem Werkzeugmagazin in die Maschinenspindel und/oder von der Maschinenspindel in das Werkzeugmagazin ohne zusätzliche Stillstandszeiten und hauptzeitparallel.

Die Reinigung kann im Werkzeugmagazin, an der Maschinenspindel, in der Zubringeeinrichtung oder im Werkzeugwechsler erfolgen.

Die Reinigungsvorrichtung bzw. ihre Bürsten 6 erfassen die Werkzeuge 2 im Bereich außerhalb der von Magazinhalterung und Werkzeugwechsler 29 benutzten Griffbereiche. Die Reinigungseinrichtung kann in die Transport- bzw. Greifereinrichtung zwischen dem Werkzeugmagazin und der Maschinenspindel integriert sein. Sie läßt sich aber auch in die Transport- bzw. Greifereinrichtung zwischen dem Werkzeugmagazin und dem Werkzeugwechsler 29 integrieren. Vorteilhaft ist es auch, die Reinigungseinrichtung in den Werkzeuggreifer 31 zu integrieren.

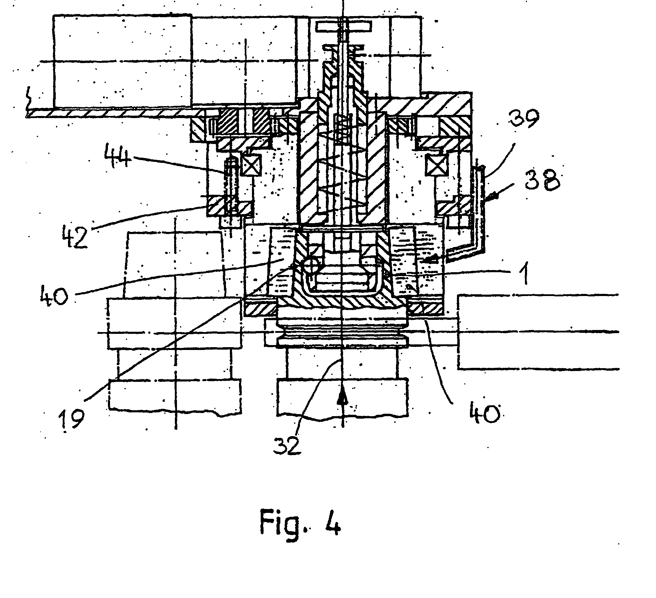

Für die Reinigungseinrichtung reicht es aus, wenn sie nur eine einzige Reinigungsbürste 6 aufweist. Das Getriebe 5 ist in diesem Falle so ausgelegt, daß der Werkzeugschaft 1 über seinen Umfang vollständig gereinigt ist, bevor er in die Maschinenspindel oder in das Werkzeugmagazin eingesetzt wird. Vorteilhaft ist es jedoch, wenn mehrere Reinigungsbürsten 6 am Umfang des Werkzeugschaftes gleichzeitig im Eingriff sind, so daß eine optimale Reinigung gewährleistet ist. Die Reinigungseinrichtung kann zusätzlich eine fluidische Spüleinrichtung 38 enthalten (Fig. 4), mit der in den Reinigungsbereich der Bürsten 6 ein entsprechendes Spülmittel zugeführt wird. Die Spüleinrichtung 38 hat, wie Fig. 4 zeigt, wenigstens eine Zuleitung 39, über welche das Spülmedium an den Schaft 1 herangeführt wird. Die Zuleitung 39 ist an einen (nicht dargestellten) Vorratsbehälter und/oder eine Förderpumpe für das Spülmedium angeschlossen. Ferner kann die Reinigungseinrichtung wenigstens eine Abstreiflippe 40 aufweisen. Vorteilhaft sind über den Umfang des Werkzeugschaftes 1 mehrere mit Abstand voneinander liegende Abstreiflippen 40 vorgesehen. Sie erstrecken sich über die axiale Länge des Außenmantels 19 des Werkzeugschaftes 1. Die Abstreiflippen 40 sind in Aufnahmen des Bürstenträgers 14 gelagert und stehen radial nach innen über ihn vor. Die Abstreiflippen 14 liegen im Bereich zwischen den Reinigungsbürsten 6. Wird der Bürstenträger 14 in der beschriebenen Weise um die Achse 32 der Reinigungseinrichtung gedreht, streifen die Abstreiflippen 40 am Außenmantel 19 des Werkzeugschaftes 1 entlang und streifen an ihm anhaftende Verunreinigungen und/oder Reste von Spülmittel ab. Das Spülmedium wird über die Zuleitung 39 in Höhe der Reinigungsbürsten 6 bzw. der Abstreiflippen 40 zugeführt.

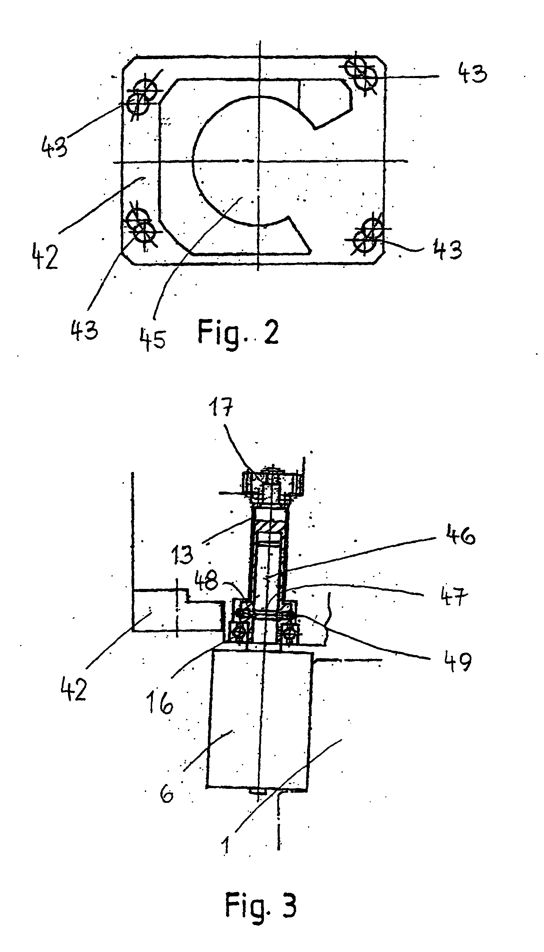

Sämtliche Verschleißteile der Reinigungseinrichtung, insbesondere die Reinigungsbürsten 6, lassen sich einfach und schnell austauschen, wenn sie mittels eines Schnellwechselsystems 41 (Fig. 1) gleichzeitig austauschbar sind. Das Schnellwechselsystem 41 hat eine am Gehäuse 4 vorgesehene Anschlußplatte 42 (Fig. 1 und 2), die im Ausführungsbeispiel etwa rechteckigen Umriß hat und in den Eckbereichen mit schlüssellochförmigen Durchtrittsöffnungen 43 für Gewindebolzen 44 aufweist. Über die Gewindebolzen 44 und die Durchtrittsöffnungen 43 erfolgt eine bajonettartige Verriegelung der Reinigungseinrichtung am Gehäuse 4. Die Anschlußplatte 42 hat für den Durchtritt der Wellen 13 und der Buchse 25 eine entsprechende Durchgangsöffnung 45 (Fig. 2).

Wie Fig. 3 zeigt, sind die Wellen 13 als Hohlwellen ausgebildet, in welche die Reinigungsbürsten 6 mit Steckteilen 46 ragen. Sie weisen eine Ringnut 47 auf, in die Rastelemente 48 einrasten, die über den Umfang des Steckteils 46 verteilt angeordnet sind. Die Rastelemente 48 werden radial nach innen federnd beaufschlagt, vorzugsweise durch einen O-Ring 49. Radial nach innen sind die Rastelemente 48 gegen Herausfallen gesichert. Um die Reinigungsbürsten 6 auszuwechseln, werden sie mit ihren Steckteilen 46 aus der jeweiligen Hohlwelle 13 herausgezogen, wobei die Rastverbindung gelöst wird. Die Reinigungsbürsten 6 lassen sich dementsprechend auch einfach wieder in der Hohlwelle 13 befestigen, indem die Steckteile 46 so weit in die Hohlwelle 13 geschoben werden, bis die Rastelemente 48 in die Ringnut 47 eingreifen und das Steckteil 46 in der Hohlwelle 13 verriegeln.

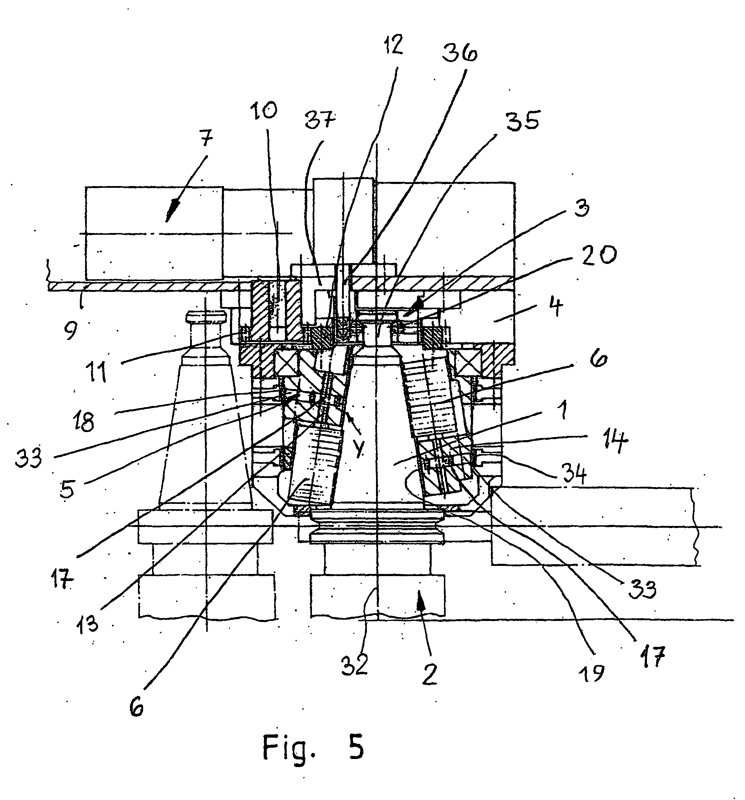

Bei der Ausführungsform gemäß den Fig. 5 bis 7 hat das Werkzeug 2 im Gegensatz zur Ausführungsform nach den Fig. 1 bis 4 keinen Kurzkegel als Schaft 1, sondern einen Langkegel. Der Schaft 1 ist in diesem Falle ein Steilkegelschaft bzw. ein BT-Schaft oder ein ANSI-Schaft. Dementsprechend ist die Werkzeugspanneinrichtung an diese Form des Werkzeugschaftes 1 angepaßt. Die Reinigungsvorrichtung hat wiederum das Gehäuse 4, an dessen Seitenwand 9 der Antrieb 7 für das Getriebe 5 der Reinigungseinrichtung befestigt ist. Das Getriebe 5 ist entsprechend der vorhergehenden Ausführungsform vorteilhaft ein Planetengetriebe mit dem Sonnenrad 12 und den Planetenrädern 17. Im Unterschied zur vorigen Ausführungsform greifen die Planetenräder 17 nicht in den feststehenden Zahnkranz 18 des Gehäuses 4 ein, sondern über jeweils ein Zwischenrad 33. Die Planetenräder 17 sitzen etwa in halber Länge drehfest auf den Wellen 13 innerhalb des Bürstenträgers 14. Entsprechend dem Kegelwinkel liegen die Wellen 13 entsprechend der vorigen Ausführungsform schräg zueinander, so daß die drehfest auf den Wellen 13 sitzenden Reinigungsbürsten 6 über ihre axiale Länge den Werkzeugschaft 1 reinigen können. Da der Werkzeugschaft 1 im Vergleich zur vorigen Ausführungsform wesentlich länger und die Länge der Reinigungsbürsten 6 kleiner als die axiale Länge des Werkzeugschaftes 1 ist, sind wenigstens zwei Reinigungsbürsten 6 notwendig, die axial versetzt zueinander angeordnet sind. Diese axial versetzt zueinander angeordneten Reinigungsbürsten 6 haben vorteilhaft einander überlappende Arbeitsbereiche, so daß die konische Mantelfläche 19 des Werkzeugschaftes 1 über ihre Länge einwandfrei gereinigt wird. Entsprechend der vorhergehenden Ausführungsform ist die Reinigungseinrichtung vorteilhaft mit mehreren, über den Umfang des Werkzeugschaftes 1 verteilt angeordneten Reinigungsbürsten 6 versehen. In diesem Fall sind die Reinigungsbürsten vorteilhaft abwechselnd axial gegeneinander versetzt.

Aufgrund des axialen Versatzes der Reinigungsbürsten 6 ist das Gehäuse 4 der Reinigungseinrichtung innenseitig mit einem zweiten feststehenden Zahnkranz 34 versehen, in den die entsprechenden Zwischenräder 33 eingreifen, die mit den Planetenrädern 17 in Eingriff sind. Die beiden feststehenden Zahnkränze 18 und 34 haben axialen Abstand voneinander.

Der Antrieb des Planetengetriebes 5 erfolgt entsprechend der vorhergehenden Ausführungsform vom Antrieb 7 aus, auf dessen Antriebswelle 10 drehfest das Zahnrad 11 sitzt, das mit dem Sonnenrad 12 des Planetengetriebes 5 in Eingriff ist. Da es mit dem Bürstenträger 14 drehfest verbunden ist, dreht der Bürstenträger um die Achse 32, so daß die Reinigungsbürsten 6 um diese Achse 32 umlaufend bewegt werden. Gleichzeitig drehen die Reinigungsbürsten 6 um ihre Achsen. Dadurch wird eine wirkungsvolle Reinigung des Werkzeugschaftes 1 erreicht.

Der Werkzeugschaft 1 ist am freien Ende mit einem Einzugsbolzen 35 versehen, der in der Spannstellung von den Verriegelungselementen 20 der Werkzeugspanneinrichtung 3 in bekannter Weise hintergriffen wird.

Um das Werkzeug 2 zusätzlich zur Rückhaltekraft der federbelasteten Kugel 20 gegen Herausfallen zu sichern, wird eine weitere Kugel durch das Sicherungselement 36, vorzugsweise ein Bolzen, verriegelt. Das Sicherungselement 36 wird mechanisch, elektrisch oder fluidisch betätigt und im Funktionsablauf sensorisch überwacht.

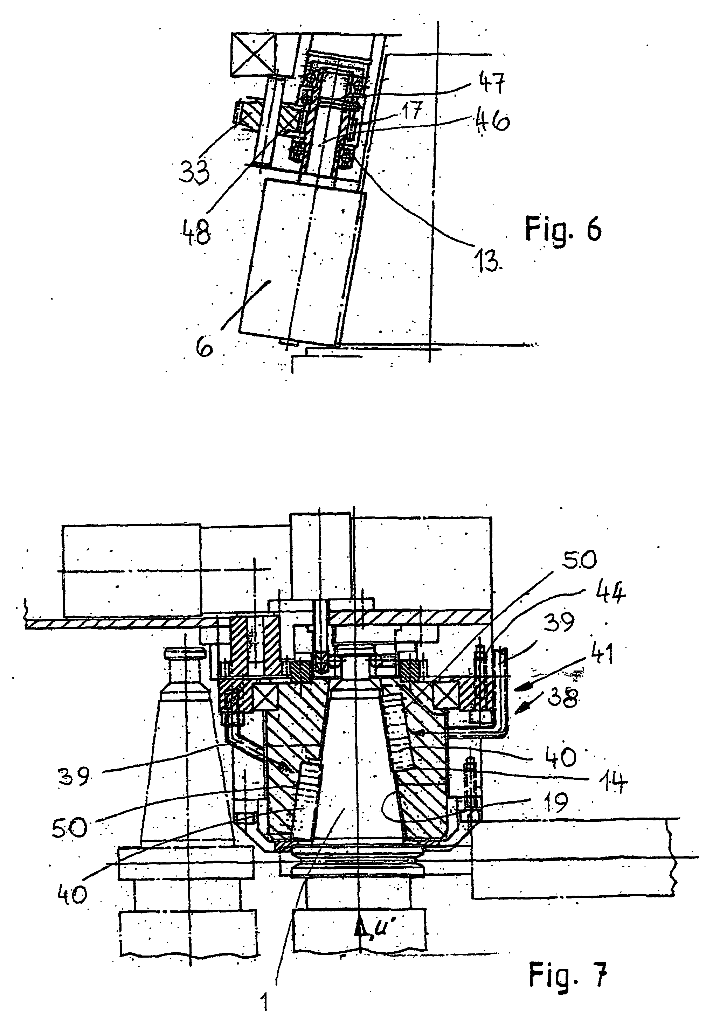

Die Reinigungsbürsten 6 sind, wie Fig. 6 zeigt, entsprechend der vorigen Ausführungsform mit dem Steckteil 46 in Form eines Steckzapfens versehen, der in der Hohlwelle 13 rastend gehalten ist. Das Steckteil 46 weist die Ringnut 47 auf, in welche die Rastelemente 48 eingreifen und auf diese Weise das Steckteil 46 in der Hohlwelle 13 axial sichern. Auf diese Weise können die Reinigungsbürsten 6 sehr einfach ein- und ausgewechselt werden.

Fig. 7 zeigt einen Teil der Spüleinrichtung 38 mit den Zuleitungen 39 für das Spülmedium. Die Zuleitungen 39 sind wiederum an einen (nicht dargestellten) Vorratsbehälter und/oder eine Förderpumpe für das Spülmedium angeschlossen und tragen das Spülmedium in Höhe der Reingiungsbürsten 6 bzw. der Abstreiflippen 40 so aus, daß das Spülmedium an den Außenmantel 19 des Werkzeugschaftes 1 gelangt. Die Abstreiflippen 40 sind entsprechend den Reinigungsbürsten 6 axial versetzt zueinander angeordnet. Sie haben außerdem vorteilhaft einander überlappende Arbeitsbereiche, so daß am Werkzeugschaft 1 anhaftende Verunreinigungen und/oder Reste von Spülmittel zuverlässig abgestreift werden. Die Abstreiflippen 40 sind in entsprechenden Aufnahmen 50 des Bürstenträgers 14 gelagert und stehen radial nach innen über ihn vor. Entsprechend der vorhergehenden Ausführungsform sind die Abstreiflippen 40 elastisch ausgebildet. Entsprechend der Konizität des Werkzeugschaftes 1 sind die Abstreiflippen 40 entsprechend schräg angeordnet.

Die Ausführungsform nach den Fig. 5 bis 7 weist auch das Schnellwechselsystem 41 mit den Gewindebolzen 44 auf, welche bajonettartig in den Durchtrittsöffnungen 45 (Fig. 2) der entsprechenden Anschlußplatte 42 gehalten sind.

Die Reinigungseinrichtung gemäß den Fig. 5 bis 7 arbeitet in gleicher Weise wie die Ausführungsform nach den Fig. 1 bis 4.

## Patentansprüche

1. Verfahren zum Reinigungen von Werkzeugschäften (1), bei dem die Werkzeugschäfte (1) mit wenigstens einem Reinigungselement (6) genreinigt werden und die Reinigung während des Werkzeugtransports von einem Werkzeugmagazin in eine Maschinenspindel und/oder von der Maschinenspindel in das Werkzeugmagazin stattfindet,
**dadurch gekennzeichnet, daß** das Reinigungselement (6) während des Werkzeugtransports zusammen mit dem Werkzeug (2) bewegt wird.

2. Verfahren nach Anspruch 1,
**dadurch gekennzeichnet, daß** die Reinigung in einer beliebigen Lage des Werkzeuges (2) in einer Zubringeinrichtung oder in einem Werkzeugwechsler (29) erfolgt.

3. Transport,- bzw. Greifervorrichtung zwischen Werkzeugmagazin und Maschinenspindel bzw. Werkzeugwechsler (29), zur Durchführung des Verfahrens nach Anspruch 1 oder 2, mit mindestens einer Aufnahme (4) für einen Werkzeugschaft (1), in der ein Reinigungselement (6) untergebracht ist, so dass die Reinigung des Werkzeugschafts (1) während dem Werkzeugtransport stattfindet.

4. Vorrichtung nach Anspruch 3,
**dadurch gekennzeichnet, daß** die Vorrichtung das Werkzeug (2) außerhalb eines von einer Magazinhalterung und vom Werkzeugwechsler (29) benutzten Griffbereiches erfaßt.

5. Vorrichtung nach Anspruch 3 oder 4,
**dadurch gekennzeichnet, daß** die Vorrichtung in einen Werkzeuggreifer integriert ist.

6. Vorrichtung nach einem der Ansprüche 3 bis 5,
**dadurch gekennzeichnet, daß** das Reinigungslement (6) um die Achse (32) des Werkzeugschaftes (1) umlaufend bewegbar ist.

7. Vorrichtung nach einem der Ansprüche 3 bis 6,
**dadurch gekennzeichnet, daß** das Reinigungselement (6) um seine Achse drehbar antreibbar ist.

8. Vorrichtung nach einem der Ansprüche 3 bis 7,
**dadurch gekennzeichnet, daß** zum Antrieb des Reinigungselementes (6) ein vorteilhaft als Planetengetriebe ausgebildetes Umlaufgetriebe (5) vorgesehen ist.

9. Vorrichtung nach einem der Ansprüche 6 bis 8,
**dadurch gekennzeichnet, daß** die Drehachse des Reinigungselementes (6) parallel zur Erzeugenden des Außenmantels (19) des Werkzeugschaftes (1) liegt.

10. Vorrichtung nach einem der Ansprüche 3 bis 9,
**dadurch gekennzeichnet, daß** über den Umfang des Werkzeugschaftes (1) mehrere Reinigungselemente (6) vorgesehen sind.

11. Vorrichtung nach einem der Ansprüche 3 bis 10,
**dadurch gekennzeichnet, daß** das Reinigungselement (6) in einem vorteilhaft um seine Achse drehbar antreibbaren Träger (14) gelagert ist.

12. Vorrichtung nach Anspruch 11,
**dadurch gekennzeichnet, daß** das Reinigungselement (6) im Träger (14) um seine Achse drehbar gelagert ist.

13. Vorrichtung nach einem der Ansprüche 3 bis 12,
**dadurch gekennzeichnet, daß** das Reinigungselement (6) eine Reinigungsbürste ist.

14. Vorrichtung nach einem der Ansprüche 11 bis 13,
**dadurch gekennzeichnet, daß** der Träger (14) in der Aufnahme (4) drehbar gelagert ist.

15. Vorrichtung nach einem der Ansprüche 3 bis 14,
**dadurch gekennzeichnet, daß** sich das Reinigungselement (6) über die Länge des Werkzeugschaftes (1) erstreckt.

16. Vorrichtung nach einem der Ansprüche 3 bis 15,
**dadurch gekennzeichnet, daß** über die Länge des Werkzeugschaftes (1) wenigstens zwei, vorteilhaft einander überlappende Arbeitsbereiche aufweisende Reinigungselemente (6) vorgesehen sind.

17. Vorrichtung nach einem der Ansprüche 3 bis 16,
**dadurch gekennzeichnet, daß** die Vorrichtung eine fluidische Spüleinrichtung (38) aufweist.

18. Vorrichtung nach einem der Ansprüche 3 bis 17,
**dadurch gekennzeichnet, daß** die Vorrichtung mindestens eine, vorteilhaft im Träger (14) gelagerte und sich über die Länge des Werkzeugschaftes (1) erstreckende Abstreiflippe (40) aufweist.

19. Vorrichtung nach Anspruch 18,
**dadurch gekennzeichnet, daß** über die Länge des Werkzeugschaftes (1) wenigstens zwei, vorteilhaft einander überlappende Arbeitsbereiche aufweisende Abstreiflippen (40) vorgesehen sind.

20. Vorrichtung nach einem der Ansprüche 3 bis 19,
**dadurch gekennzeichnet, daß** Verschleißteile der Vorrichtung, insbesondere das Reinigungselement (6), mittels eines Schnellwechselsystems (41) austauschbar sind.

## Claims

1. A method of cleaning tool shafts (1), the tool shafts (1) being cleaned with at least one cleaning element (6) and performing the cleaning during the transport of the tool from a tool magazine into a machining spindle and/or from the machining spindle into the tool magazine,
**characterised in that** the cleaning element (6) is moved during the transport of the tool together with the tool (2).

2. A method according to claim 1,
**characterised in that** the cleaning is performed in any position whatever of the tool (2) in a feeding device or in a tool changer (29).

3. A transport- or gripper device between tool magazine and tool spindle respectively tool changer (29) for performing the method according to claim 1 or 2 with at least one holder (4) for a tool shaft (1) within which is installed a cleaning element (6) so that the cleaning of the tool shaft (1) can take place during the tool transport.

4. A device according to claim 3,
**characterised in that** the device catches the tool (2) outside of a gripper area used by the magazine holder and the tool changer (29).

5. A device according to claim 3 or 4,
**characterised in that** the device is integrated within a tool gripper.

6. A device according to one of the claims 3 to 5,
**characterised in that** the cleaning element (6) is movable round about the axis (32) of the tool shaft (1).

7. A device according to one of the claims 3 to 6,
**characterised in that** the cleaning element (6) may be driven in rotation around its axis.

8. A device according to one of the claims 3 to 7,
**characterised in that** a epicyclic gear (5) advantageously formed as a planetary gear is provided for driving the cleaning element (6).

9. A device according to one of the claims 6 to 8,
**characterised in that** the rotation axis of the cleaning element (6) is situated parallel to the generatrix of the outer shell surface (19) of the tool shaft (1).

10. A device according to one of the claims 3 to 9,
**characterised in that** several cleaning elements (6) are provided upon the perimeter of the tool shaft (1).

11. A device according to one of the claims 3 to 10,
**characterised in that** the cleaning element (6) is mounted in a support (14), advantageously drivable in rotation around its axis.

12. A device according to claim 11,
**characterised in that** the cleaning element (6) is pivoted about its axis within said support (14).

13. A device according to one of the claims 3 to 12,
**characterised in that** the cleaning element (6) is a cleaning brush.

14. A device according to one of the claims 11 to 13,
**characterised in that** the support (14) is pivoted in the holder (4).

15. A device according to one of the claims 3 to 14,
**characterised in that** the cleaning element (6) extends about the length of the tool shaft (1).

16. A device according to one of the claims 3 to 15,
**characterised in that** on the length of the tool shaft (1) are provided at least two cleaning elements (6), advantageously comprising work spaces overlapping one another.

17. A device according to one of the claims 3 to 16,
**characterised in that** the device comprises a fluidic flushing installation (38).

18. A device according to one of the claims 3 to 17,
**characterised in that** the device comprises at least one wiper lip (40) advantageously mounted within the support (14) and extending along the length of the tool shaft (1).

19. A device according to claim 18,
**characterised in that** along the length of the tool shaft (19) are provided at least two wiper lips (40), advantageously comprising work areas overlapping one another.

20. A device according to one of the claims 3 to 19,
**characterised in that** wearing parts of the device, particularly the cleaning element (6), are replaceable via a quick change system (41).

## Revendications

1. Procédé de nettoyage de tiges d'outils (1), dans lequel les tiges d'outils (1) sont nettoyées avec au moins un élément de nettoyage (6) et le nettoyage a lieu pendant le transport de l'outil depuis un chargeur d'outil jusque dans une broche de machine et/ou depuis la broche de machine jusque dans le chargeur d'outil, **caractérisé en ce que** l'élément de nettoyage (6) est déplacé conjointement avec l'outil (2) pendant le transport de l'outil.

2. Procédé selon la revendication 1, **caractérisé en ce que** le nettoyage a lieu dans une position quelconque de l'outil (2) dans un dispositif d'amenée ou dans un changeur d'outil (29).

3. Dispositif de transport ou de préhension entre un chargeur d'outil et une broche de machine ou un changeur d'outil (29) pour mettre en oeuvre le procédé selon l'une ou l'autre des revendications 1 et 2, comportant au moins un logement (4) pour une tige d'outil (1), dans lequel est logé un élément de nettoyage (6), de telle sorte que le nettoyage de la tige d'outil (1) a lieu pendant le transport de l'outil.

4. Dispositif selon la revendication 3, **caractérisé en ce que** le dispositif saisit l'outil (2) en dehors d'une zone de préhension utilisée par un support de chargeur et par le changeur d'outil (29).

5. Dispositif selon l'une ou l'autre des revendications 3 et 4, **caractérisé en ce que** le dispositif est intégré dans un preneur d'outil.

6. Dispositif selon l'une des revendications 3 à 5, **caractérisé en ce que** l'élément de nettoyage (6) est mobile en révolution autour de l'axe (32) de la tige d'outil (1).

7. Dispositif selon l'une des revendications 3 à 6, **caractérisé en ce que** l'élément de nettoyage (6) peut être entraîné en rotation autour de son axe.

8. Dispositif selon l'une des revendications 3 à 7, **caractérisé en ce que** pour entraîner l'élément de nettoyage (6), il est prévu un engrenage épicycloïdal (5) réalisé avantageusement sous forme d'engrenage planétaire.

9. Dispositif selon l'une des revendications 6 à 8, **caractérisé en ce que** l'axe de rotation de l'élément de nettoyage (6) est situé parallèlement à la génératrice de l'enveloppe extérieure (19) de la tige d'outil (1).

10. Dispositif selon l'une des revendications 3 à 9, **caractérisé en ce que** plusieurs éléments de nettoyage (6) sont prévus sur la périphérie de la tige d'outil (1).

11. Dispositif selon l'une des revendications 3 à 10, **caractérisé en ce que** l'élément de nettoyage (6) est monté dans un support (14) susceptible d'être entraîné avantageusement en rotation autour de son axe.

12. Dispositif selon la revendication 11, **caractérisé en ce que** l'élément de nettoyage (6) est monté dans le support (14) en rotation autour de son axe.

13. Dispositif selon l'une des revendications 3 à 12, **caractérisé en ce que** l'élément de nettoyage (6) est une brosse de nettoyage.

14. Dispositif selon l'une des revendications 11 à 13, **caractérisé en ce que** le support (14) est monté en rotation dans le logement (4).

15. Dispositif selon l'une des revendications 3 à 14, **caractérisé en ce que** l'élément de nettoyage (6) s'étend sur la longueur de la tige d'outil (1).

16. Dispositif selon l'une des revendications 3 à 15, **caractérisé en ce que** sur la longueur de la tige d'outil (1) sont prévus au moins deux éléments de nettoyage (6) présentant avantageusement des zones de travail qui se chevauchent.

17. Dispositif selon l'une des revendications 3 à 16, **caractérisé en ce que** le dispositif présente un dispositif de rinçage (37) fluidique.

18. Dispositif selon l'une des revendications 3 à 17, **caractérisé en ce que** le dispositif présente au moins une lèvre de raclage (40) montée avantageusement dans le support (14) et s'étendant sur la longueur de la tige d'outil (1).

19. Dispositif selon la revendication 18, **caractérisé en ce que** sur la longueur de la tige d'outil (1) sont prévues au moins deux lèvres de raclage (4) présentant avantageusement des zones de travail se chevauchant.

20. Dispositif selon l'une des revendications 3 à 19, **caractérisé en ce que** les pièces d'usure du dispositif, en particulier l'élément de nettoyage (6), sont interchangeables au moyen d'un système de changement rapide (41).
